Europäisches Patentamt

European Patent Office

Office européen des brevets

(11) Publication number: **0 062 502**
A1

# EUROPEAN PATENT APPLICATION

(21) Application number: **82301736.3**

(51) Int. Cl.³: **B 60 P 1/18**

(22) Date of filing: **01.04.82**

(30) Priority: **03.04.81 AU 8294/81**

(43) Date of publication of application: **13.10.82**
**Bulletin 82/41**

(84) Designated Contracting States: **AT BE CH DE FR GB IT LI LU NL SE**

(71) Applicant: **HOCKNEY ENGINEERING PTY. LIMITED, 2 Dupas Street, Smithfield New South Wales 2164 (AU)**

(72) Inventor: **Dingle, John Trevor, 41 Mt. William Street, Gordon New South Wales, 2072 (AU)**

(74) Representative: **JENSEN & SON, 8 Fulwood Place High Holborn, London WC1V 6HG (GB)**

(54) **Tipping trailer for articulated vehicles.**

(57) An articulated vehicle including a prime mover (10) attached to a trailer (11) by means of a fifth wheel assembly (13), said vehicle further including a hoist (18) attached to the front end of the trailer (11) to cause tipping thereof, said vehicle further including a winch having a flexible line (25) extending between the prime mover (10) and the rear end of the trailer (11) to aid in hoisting of the forward end of the trailer (11).

- 1 -

"TIPPING TRAILER FOR AN ARTICULATED VEHICLE"

The present invention relates to articulated vehicles and more particularly but not exclusively to articulated vehicles having a tipping trailer.

Tipping of long articulated trailers to rear discharge the pay load is a problem if the load is of the type which tends to stick and does not fall easily under the influence of gravity due to resistance offered by the sides of the trailer. In such cases, it is necessary to have a large tipping angle. This problem is exacerbated by the use of multi-stage telescopic hoists since the effective thrust of the hoist decreases as the hoist increases in length, since the later stages of the hoist have similar operating diameters. It has been attempted to overcome this problem by increasing the diameter of the hoist or using less stages each of longer travel.

The disadvantages of the above systems include the increase in physical space occupied by the larger hoists and the increased weight and corresponding decrease in pay load capacity as well as increased cost.

It is an object of the present invention to overcome or substantially ameliorate the above disadvantages.

There is disclosed herein an articulated vehicle, including a prime mover and a trailer coupled to the primemover by a fifth wheel assembly, said trailer including a body and a hoist to raise the forward end of the body so as to cause tipping thereof about a horizontal axis located adjacent the rear of the trailer and hoist assist means extending between the trailer and prime mover to aid the hoist in tipping the trailer body.

A preferred form of the present invention will now be described by way of example with reference to the accompanying drawings, wherein:

Figure 1 schematically illustrates a prime mover and tiltable trailer connected thereto with the trailer in a non-tilted position;

Figure 2 schematically depicts the prime mover and trailer of Figure 1 with the trailer being initiated to move

- 2 -

to a tilted position;

Figure 3 schematically depicts the prime mover and trailer of Figure 1 with the trailer fully tilted, while there is further schematically illustrated in ghost lines a conventional hoist system;

Figure 3A schematically illustrates a hoist well used in conventional tipping trailers; and

Figure 4 schematically depicts the trailer of Figure 1 further tilted by means of a winch or such like device extending between the trailer and the main chassis of the prime mover.

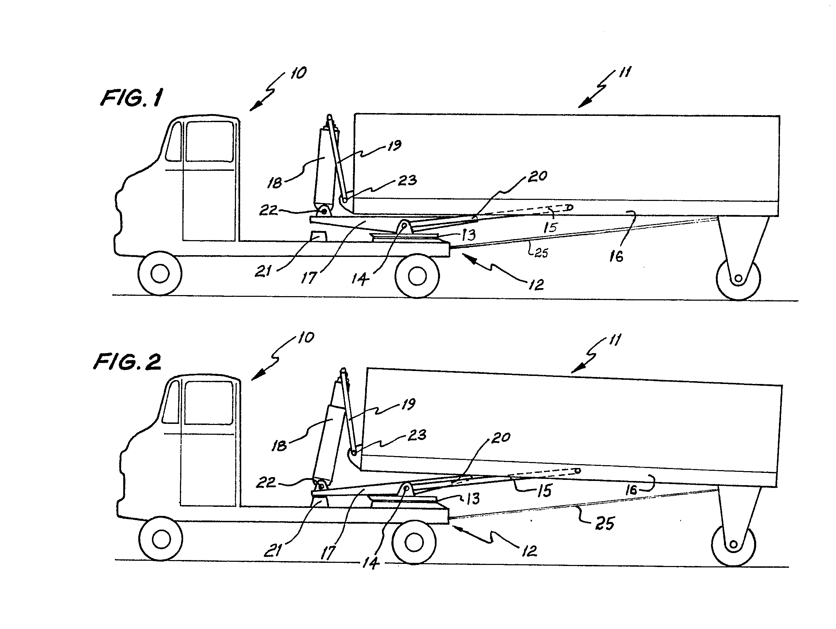

In Figure 1 the prime mover 10 is coupled to a tipping trailer 11 by substantially a conventional fifth wheel arrangement 12. The fifth wheel arrangement includes a turntable 13 to allow relative pivoting between the prime mover 10 and trailer 11 about a vertical axis. Additionally, there is provided a pivot 14 which permits relative pivoting between the prime mover 10 and trailer 11 about a generally horizontal axis. Extending from the pivot 14 are draw bars 15 which are pivotally attached at one end of the body 16 of the trailer 11. Also coupled to the turntable is a lever 17 by means of a pivot generally coaxial with the pivot 14. Pivotally attached to the forward end of the lever 17 is a hydraulic hoist 18 which is extendable to tilt the body 16 to displace the load contained therein.

The hoist 18 is attached to the forward end of the body 16 by means of straps 19. The straps 19 are pivotally attached to the top of the hoist 18 and the body 16. The lever 17 also extends rearwardly so as to have a rear part 20 which extends beneath the body 16.

As can be seen more particularly in Figure 2, as the hoist 18 is actuated, the lever 17 is caused to pivot anticlockwise so as to engage resilient abutment 21, while additionally the rear part 20 is caused to pivot upward so as to initiate tilting of the body 16. Upon the lever 17 engaging the abutment 21, the hoist 18 has a firm reaction point, and accordingly extends taking with it the straps 19

- 3 -

and the front of the body 16 to thereby cause tilting. The lever 17 must possess sufficient stress to withstand bending about the axis of the pivot 14, while additionally must have sufficient torsional strength to resist twisting about a generally longitudinal axis to thereby enable it to support the hoist 18.

Because of the close proximity of the pivots 22 and 23, when the trailer 11 is not in a tilted position, the hoist 18 is unstable in a fore and aft direction. In this particular embodiment, the pivots 22 and 23 are positioned so that the hoist 18 leans back upon the front wall of the trailer when not in operation. To further provide stability of the hoist 18 there could be provided a cradle on the front portion of the body 16 to engage the hoist 18, while further to this there could be provided a clip arrangement by means of a pin which could engage an eyelet on the hoist 18 to thereby fix it to the body 16. The pin could be arranged with a linkage for its easy removal.

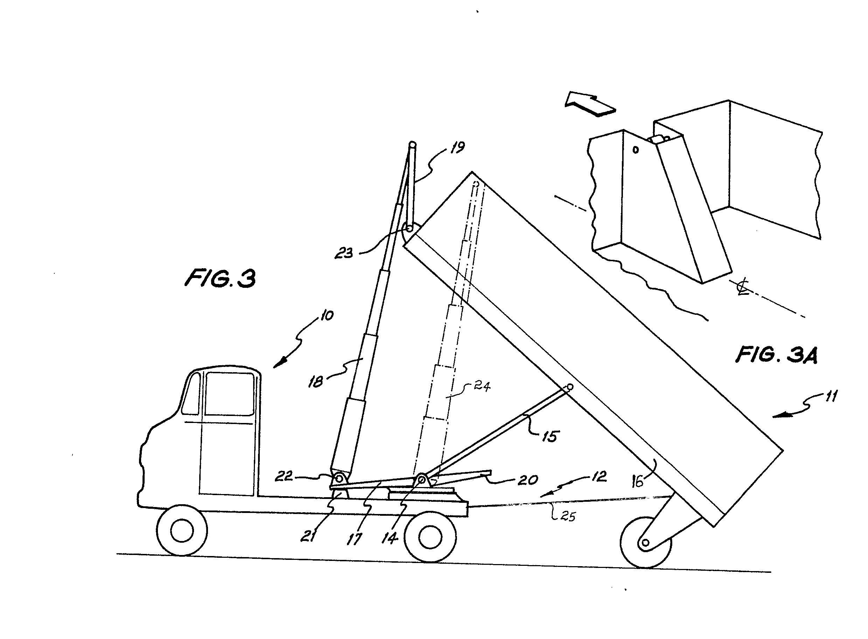

Now still further with reference to Figure 3, the conventional hoist 24 is illustrated as extending between the prime mover 10 and the forward portion of the trailer 11. In situations where it is desired to further increase the tilting angle by means of the hoist 18 or hoist 24, a winch could be used to retract a line 25 extending between the prime mover 10 and the rear of the body 16 of the trailer 11 to thereby cause the rear of the trailer 11 to further approach the prime mover 10. This particular use of a winch located on the prime mover adapted to draw the line 25 in, has a particular advantage that, as the hoist extends, the winch has a greater leverage which compensates for the loss of effective lift exerted by the hoist 18 or 24 on the front portion of the trailer 11. Addditionally, where straps 19 are employed, the trailer may be still further tilted, as seen in Figure 4, so that a strap 19 is caused to rotate anticlockwise about the upper extremity of the hoist 18.

The abovementioned hoist and line 25 may be replaced by other means such as a telescopic hoist or the like which

- 4 -

can be employed to draw the rear of the trailer 11 towards the prime mover 10.

0062502

- 5 -

## CLAIMS

1. An articulated vehicle, including a prime mover and a trailer coupled to the primemover by a fifth wheel assembly, said trailer including a body and a hoist to raise the forward end of the body so as to cause tipping thereof about a horizontal axis located adjacent the rear of the trailer and hoist assist means extending between the trailer and prime mover to aid the hoist in tipping the trailer body.

2. The articulated vehicle of claim 1 wherein said hoist assist means includes a winch and a flexible line with said winch being adapted to coil the flexible line to aid in tipping the trailer body.

3. The articulated vehicle of claim 2 wherein said winch is mounted on said prime mover and the extremity of said flexible line is attached to said trailer adjacent the rear end thereof.

4. The articulated vehicle of claim 1 wherein said hoist assist means is a further hydraulic hoist extending between said prime mover and trailer which when retracted aids in tipping of said trailer.

5. An articulated vehicle substantially as hereinbefore described with reference to the accompanying drawings.

FIG.1

FIG.2

FIG. 3A

FIG. 3

# 0062502

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A- 797 878 (SHONROCK) *The whole document* | 1,2,3 | B 60 P 1/18 |
| X | FR-A-1 173 267 (SCHONROCK) *Abstract j,k,p* | 1,2,3 | |
| X | US-A-4 033 625 (FIKSE) *Column 4, lines 35-43* | 1,4 | |
| X | US-A-2 775 480 (BRASWELL) *The whole document* | 1,2 | |
| X | US-A-3 336 080 (HECK) *The whole document* | 1 | |
| A | EP-A-0 042 718 (HOCKNEY) | | |

TECHNICAL FIELDS SEARCHED (Int. Cl. ³)

B 60 P

The present search report has been drawn up for all claims

| Place of search | Date of completion of the search | Examiner |
|---|---|---|
| THE HAGUE | 07-07-1982 | SCHMITTER J.M. |

EPO Form 1503. 03.82